# EUROPEAN PATENT SPECIFICATION

(11) **EP 0 693 025 B1**
(45) Date of publication and mention of the grant of the patent: **16.07.1997**
(21) Application number: 94912593.4
(22) Date of filing: 08.04.1994
(51) Int. Cl.: B29C 47/60, B29C 47/66, B01J 19/20, B01J 10/00, B01J 15/00, C12M 1/40

(54) **MIXING APPARATUS AND METHOD**
MISCHAPPARAT UND VERFAHREN
PROCEDE ET APPAREIL DE MELANGE

(30) Priority: 08.04.1993 GB 9307429; 08.04.1993 GB 9307430
(43) Date of publication of application: 24.01.1996
(73) Proprietor: Green, Christopher, Lichfield, Staffordshire WS13 6PW (GB); Murray, Brian, Lichfield, Staffordshire WS13 6PW (GB); Selman, Gordon Leslie, Thetford, Norfolk IP24 1PB (GB)
(72) Inventor: GREEN, Christopher, Lichfield, Staffordshire WS13 6PW (GB); MURRAY, Brian, Lichfield, Staffordshire WS13 6PW (GB); SELMAN, Gordon Leslie, Thetford, Norfolk IP24 1PB (GB)
(74) Representative: Shaw, Laurence
(86) International application number: GB9400759
(87) International publication number: WO9423931

(56) References cited:
- WO-A-86/02313
- WO-A-89/12499
- DE-A- 3 734 328
- FR-A- 2 134 377
- FR-A- 2 380 072
- FR-A- 2 388 783
- GB-A- 592 834
- GB-A- 1 133 357
- GB-A- 2 171 419
- US-A- 1 762 433
- US-A- 4 442 216
- US-A- 5 069 885
- US-A- 5 156 790
- US-A- 5 198 268
- MILCHWISSENSCHAFT, vol.40, no.10, October 1985, MüNCHEN, DE pages 605 - 607 K. KIM ET AL. 'Continuous acidification of milk before ultrafiltration by an immobilized cell bioreactor'

## Description

The invention relates to the control of reactions and in particular to the use of substances which control the rate of chemical reactions, including biological reactions, e.g. catalysts and enzymes.

It is well known to add a catalyst to a mix of interactive chemicals to accelerate the rate of a chemical reaction. It is known to pass the interactive chemicals and a catalyst therefor through mixing apparatus such as an extruder. The extruder includes a path through which the materials are passed in order to be mixed, the path being defined by the inner wall of the chamber (usually called the barrel) and the contained agitator, typically a screw member or members. The screw member usually has paddles, or blades, some shaped to move material and others to intermix. The catalyst should be recovered when the reaction products are isolated. This is inconvenient and expensive and there are other drawbacks.

According to the invention in one aspect there is provided mixing apparatus comprising an elongate chamber containing a moving member, an inlet towards one end of the chamber and an outlet towards the other, the member being shaped so that in cooperation with the wall of the chamber interactive materials introduced in the inlet are intermixed on their passage through the apparatus to the outlet, means for causing relative movement between the member and the chamber a substance which influences the reaction of interactive materials being present, wherein the substance is present on the surface of the member and/or of the chamber wall and in that the member is dimensioned relative to the chamber to form a relatively thin film of reactants as they are passed through the chamber towards the outlet.

According to the invention in another aspect there is provided a method of mixing the interactive components of a composition, the method comprising urging the components through a reaction chamber containing a moving member, the member being arranged to mix the reactants, a substance which will influence the interaction being present, wherein the substance is present on the surface of the member and/or of the wall of the chamber, the member is dimensioned relative to the chamber to form a relatively thin film of reactants and in that the mixing takes place continuously.

Because in the apparatus of the invention the reactants are brought into contact with the catalyst or enzyme in the relatively small clearance between the rotary member and the bounding wall of the reaction chamber, a high surface area of materials is exposed to the catalyst and under high pressure. As a result a high proportion of the reactants is reacted under the influence of the catalyst or enzyme. The clearance is dimensioned so that a thin film of the reactants is formed. The clearance, which will be dependant on the reactants being processed, may be as small as is practical on the one hand and on the other less than the distance which would cause reacted products to accumulate in the clearance and as a result prevent the mixing being carried out continuously. The size of the clearance may be adjusted by the relative proportioning of the member in the chamber.

Mixing apparatus disclosed in GB-A-1133357 published in 1968 is based on the realisation that when catalysing certain bulk reactions, e.g. polymerisation, there is a need to address the problems of heat generation and accumulation of reaction products. In the disclosed apparatus the catalyst is coated on a wall of the reaction chamber, the wall being in contact with a heat exchange fluid flow so that the heat is removed through the wall of the chamber. Periodically the reaction product is removed from the catalyst coating by a scraper attached to a shalt and then passed downstream where a screw on the shaft urges the accumulated reaction product out of the chamber. Such apparatus is not relevant to the present invention which relates to continuous reaction and apparatus which by its shape and function brings together the reactants in the form of a highly sheared thin film.

The substance will be a catalyst or an enzyme depending on the reactions which are to take place. For convenience, the invention will be described in relation to catalytically controlled reactions.

The catalytically active material selected will depend on the reactions to take place. The apparatus may be used to perform a wide range of reactions for example, in the polymer industry..

The apparatus may be useful in the recovery of glucose from dustbin waste by acid catalysed hydrolysis, and continuous rendering of animal or vegetable fatty wastes. In the wood and paper industries, the reactions include catalysed delignification of wood chip and the conversion of waste lignin into substances such as phenol. In the food industry the reactions include hydrogenation of vegetable oils, using nickel and ruthenium catalysts to hydrogenate carbohydrates such as molasses into sugars such as xylitol, mannitol and sorbitol.

Typical catalysts are heterogeneous catalysts and include metals and derivatives such as palladium, copper, nickel, metal oxides, metal sulphides; and the like.

The catalytically active materials may be provided over all or part of the member or the wall of the barrel. It is preferred to locate the material on paddle parts or like elements of the member. The member may be formed of a wide range of materials including:
- metals or alloys: e.g. iron, steel, mild steel, stainless steel, anodized aluminium , or the like
- oxides: e.g. alumina, zirconia or the like
- carbon: e.g. monolithic carbon
- organics: e.g. high temperature polymers, ion exchange resins

The catalytically active material may be applied to the surface of the member and/or the wall of the barrel in a variety of ways. Suitable techniques to apply the catalyst to the member include:
- electroless plating
- spraying
- chemical vapour deposition
- alumina wash coating sputtering followed by impregnation
- direct impregnation

The catalytically active material can be secured to the surface in such a way that it is permanently present thereon or it can be so mounted that it, or a proportion thereof, is released to emerge with the catalysed mix from the outlet. In this case a slurry of the catalyst is cast on a magnetic support held to a member or barrel made of magnetic material. The catalyst is then usually separated from the mix, e.g. by magnetic separation in the case of magnetic catalytically active material.

The mixing apparatus may take a variety of forms. Preferably, the member comprises a screw member. Most preferably the screw comprises a plurality of screw members, typically twin screws, which in use intermesh and closely wipe over the surface of each other and that of the inner wall of the chamber. Scroll screws are preferred. The apparatus may have one or more barrels and different mixing configurations are possible, e.g.
co-rotating intermeshing elements
co-rotating non-intermeshing elements
counter rotating intermeshing elements
counter rotating non-intermeshing elements
reciprocating elements

The barrel may be parallel sided or tapering, e.g. conical.

The apparatus may include means for controlling the temperature of longitudinally spaced apart zones along the apparatus. The apparatus may also be shaped to generate or apply pressure to different levels in different longitudinally spaced apart zones and to control residence time, speed and screw rotation. Pressure may also be generated in the system by the use of e.g. positive displacement pumps, gear pumps and the like. More than one inlet may be present, and there may be more than one outlet.

In use, reactive chemicals are fed via an inlet to into the mixing path and transported to the outlet by the screw system. The catalysed reaction mix leaves the mixer via the outlet and may be subjected to further processing.

While we do not wish the scope of the monopoly to be limited in any way by the following theory, we postulate that because of the effective mixing in the extruder, especially in the case of a twin screw system, a thin film of the materials being mixed will be brought into contact with the surface area of the rotary member for sufficient time to be influenced by the catalyst present thereon. Because a thin film of intimately mixed reactants is formed, there will be a high surface area of materials to be catalysed. The high shear conditions generated by the mixing will tend to enhance the reaction.

The apparatus of the invention may be used for a variety of industrial processes and depending on the technique involved will provide advantages over known ways of doing the same thing. For example, the apparatus enables continuous production of catalysed reactions using high hydrogen pressures, leading to safer operation, process intensification and elimination of the use of reaction solvents with a reduction in downstream processing and pollution. Because the catalytically active material is supported on a wall of the path through which the material passes, the invention makes it possible to use as catalysts which would be too costly to use otherwise. Examples include precious metals.

The apparatus of the invention may be used for continuous or batch production.

The conditions will depend on the reaction being carried out. Typically the temperature range within the reaction chamber will be about 20°C to about 400°C and the pressure range from about 0 bar to about 100 bar.

The method of the invention may be applied to a variety of chemical reactions in the polymer industry, including
graft reactions
interchain copolymer formation
coupling - crosslinking reactions
bulk polymerisation
controlled degradation
functionalisation

Representative examples of each class of chemical reaction carried out by the method are as follows.

Graft reactions include the grafting of polypropylene and esters of acrylic acid or acrylic acid esters; the grafting of vinyl silanes, e.g. using a peroxide initiator or the grafting of a vinyl silane on to a polyolefin and combining the product with a condensation catalyst; of polyphenylene ether and styrene; styrene or styrene-acrylonitrile and a saturated polyolefin, or an unsaturated EPDM in the presence of di-tert-butyl peroxide; or maleic anhydride and fumaric acid or the like; or a saturated polymer with a graftable site.

Interchain co-polymer formations are of the type used to make two immiscible polymers compatible; block co-polymer formation by end group/end group reaction, e.g. block co-polymers of Nylon with PET; graft co-polymer formation, e.g. of Nylon - polyolefin blends, or polyphenylene ether - Nylon blends, or polyester-polyolefin blends; formation of crosslinked graft co-polymers by reaction between the functionality in the main chain of each polymer, e.g. blends of polyethylene and polystyrene, or styrene - isopropenyl oxazoline co-polymer with acrylonitrile - butadiene - acrylic acid terpolymer or styrene - isopropenyl oxazoline co-polymer and ethyl acrylic acid.

Coupling/Crosslinking reactions are of the type in which the chain/extension branching takes place using coupling or condensing agents such as polyamides; Nylon 6 or 66 chain extended with polyepoxides, polyamide chain extended with diisocyanates, polyamides (Nylon 6 or 66) with polycarbodiimides.

In the case of polyesters the following are possible: polyethyleneterephthalate or polycyclohexene ter-or iso-phthalate, PET or PET with polyepoxides; chain extenders PET and 2, 2'bis (2- oxazoline); PET and polyisocyanates, PET and polycarbodiimides.

Coupling reactions using crosslinking agents are exemplified by:
i) dynamic vulcanisation which is the crosslinking of elastomers during melt processing to provide a rubbery dispersed phase of crosslinked elastomer in a continuous phase of thermoplastic resin.
ii) ionic crosslinking, e.g. ethylene acrylic acid co-polymer by reaction with zinc carboxylates, EAA co-polymer by reaction with magnesium oxide, EEA co-polymers by reaction with aluminium salts.

Bulk polymerisation takes many forms, e.g. monomer polymerisation, such as of polyetherimides; melamine-formaldehyde resin or polyesters.

Polyurethanes are also included as in the reaction of a low molecular weight polyester, hydroxyl-terminated with a typical diol chain extender and a polyisocyanate to give a polyurethane.

Polyamides are also included as in the reaction of polyacrylates and related co-polymers using a peroxide initiator; e.g. 90:10 iso-octyl acrylate and acrylic acid in a Teflon coated twin screw extruder; butyl rubber, polysiloxane, 2-acrylamido-2-methylpropane-sulphone, alone or in combination with dimethyl-acrylamide or a polyacetal.

Controlled degradation is exemplified by the case of polypropylene and other polyolefins in the presence of peroxides; polypropylene and other polyolefins in the presence of oxygen, biological polymers, e.g. waste sawdust or paperpulp to form glucose and coffee grounds to form mannan oligomer.

Polymer functionalisation and functional group modification is exemplified by halogenation, capping of carboxylic acid groups, e.g. capping carboxylic acid groups on PET; cyclisation of pendant carboxylic acid or ester groups, where adjacent carboxylic acid or ester groups on polymers have cyclised to imides by reactive extrusion with amines; ester saponification or transesterification, where ethylene-vinyl acetate co-polymer pendant ester groups are hydrolysed or where ester groups on EVA have been transesterified with an alcohol, or silane introduction by ester exchange.

Specific preferred areas of use of the invention are where one or more of the following circumstances apply:
1. Where heterogeneous (slurry) catalysts are currently used which have to be removed by time consuming filtration techniques, e.g.
   The hydrogenation of fatty nitriles to fatty amines.
   The hydroformylation of long chain olefines to long chain alcohols
2. Where residual catalyst in the product is potentially harmful, e.g.
   The hydrogenation of edible vegetable oils
3. Where it would be beneficial to retain the highly active/expensive catalyst, e.g.
   Platinum metal catalysed hydrogenation and hydroformylation reactions
4. Where a current batch process can be rendered continuous with the benefit of less material being e.g. under pressure and where pressures may be reduced, e.g.
   Fat hardening
5. Where intimate mixing is crucial to reaction rate and reaction selectivity e.g.
   The dimerisation of Oleic acid to the dimer and trimer acids
   Transesterification of dimethyl terephthalate and ethylene glycol to bisethylene terephthalate and methanol.
6. Where by-products deposit on the catalyst surface causing activity loss e.g.
   The hydrogenation of molasses to xylitol, mannitol and sorbital
7. Where solid/liquid reactions are required e.g.
   The conversion of waste lignin to useful chemicals

Thus two reactions of importance to the food industry can be carried out advantageously in the method of the invention. Firstly the hardening of fats, and secondly the conversion of carbohydrates (molasses) into xylitol, mannitol and sorbitol. In both cases the feed stocks are viscous and their continuous processing using conventional continuous flow equipment is very difficult.

Although continuous conversion of molasses has been practised using both nickel and ruthenium catalysts, problems are experienced with deposition of colloidal material from the molasses onto the catalyst surface causing serious loss of catalyst activity. The deposition of colloidal material arises from the slow percolation of the molasses solution over the packed bed of catalyst. Using the method of the invention and controlling the speed of rotation of the catalytic paddles the deposition of material onto the catalyst should be avoided.

The invention is seen to especially good use in:
i) hydrogenation of vegetable oils;
ii) hydrogenation of molasses to xylitol, mannitol and sorbitol;
iii) preparation of foodstuffs for animals and humans by mixing in the presence of enzymes of solids (nuts, oats etc) with viscous liquids (honey, syrups etc).

The invention is also applicable to the waste/energy industries. The recovery of glucose from dustbin waste employs the acid catalysed hydrolysis of cellulose. In turn the glucose formed would be used as a feedstock for fermentation to alcohol which could then be used as a cheap fuel or as a chemical feedstock. The major problem with acid hydrolysis is the removal or recovery of the acid at the end of the process, so that the glucose solution may be fermented.

The cheapest source of material for conversion to liquid hydrocarbons is domestic waste. It has already been shown that cellulosic and putriscible materials may be converted to a liquid hydrocarbon using CO/H and a ruthenium catalyst.

The plastic component of domestic waste contains a high percentage of polyethyleneterephthalate bottles used for soft drinks and bottled water. Such material may be converted to the "monomer" by reaction with an alcohol such as methanol or a glycol such as ethylene glycol. The monomer can then be either purified and recycled or used to manufacture "plastic concrete for road repair. Polyurethane may be treated in an analogous manner to obtain the "monomeric" materials.

Cases where the invention is useful in the energy and waste industries include:
i) conversion of cellulosic wastes to a hydrocarbon oil;
ii) the alkaline hydrolysis of domestic waste to glucose;
iii) recovery of PET or polyurethane from domestic waste as the respective monomers;
iv) continuous rendering of animal/vegetable fatty wastes.

The invention is also applicable to the wood and paper industries. However the present process for pulp manufacture which is semi batch, generates very large volumes of waste liquor which requires expensive treatment. Currently there are several processes for the removal of lignin from chipped wood, the most popular of which is the "black liquor" process. This utilises a solution of calcium sulphide which reacts with the lignin to solubilise it. In order to maintain an agitated slurry, excess calcium sulphide solution has to be used. The method of the invention offers the possibility that the ratio of sulphide liquor to wood chip can be lowered, and the treatment time shortened.

The preferred opportunities in the wood and paper industries are thus:
i) delignification of wood chip to produce paper pulp;
ii) the conversion of waste lignin into useful chemicals such as phenol.

Any multi-step synthesis will require protection and deprotection of functional groups. One of the most widely used protecting groups is a benzyl ether. Such ethers are easily put on using benzyl chloride or bromide and a base such as potassium hydroxide or sodium hydride. There are many methods for removal of benzyl ethers but probably the most popular are hydrogenolysis and transfer hydrogentation using ammonium formate as the hydrogen source. The reactions are usually carried out using a batch process in glass equipment. There is then a problem with the separation of a catalyst from the product which is usually achieved by filtration. Carrying out deprotection can be readily achieved using this invention as the separation problem is eliminated. Another problem is the use of gaseous hydrogenation which is difficult to contain, this problem is eliminated when ammonium formate is used.

Our evaluations suggest that the apparatus and method of the invention provides the following advantages:
- the surface area of the catalyst or enzyme is contacted with fresh reactants on a continuous basis
- a high pressure is generated easily
- the residence time distribution is substantially constant
- there are no stagnant zones in the reaction chamber
- heat and mass transfer problems arising from say a significant increase in viscosity during reaction can be handled

In order that the invention may be well understood it will now be described by way of example only with reference to the accompanying diagrammatic drawings in which:
Figure 1 is a longitudinal section through an extrusion apparatus of the invention; and
Figure 2 is an end view of the screws of the apparatus of Figure 1 showing different stages of mixing.

The apparatus comprises a housing 1 having a barrel 1A containing a screw extruder in the form of two side-by-side longitudinally extending co-rotating screws 2,3. The screws have paddles 11, some shaped for feeding, i.e. passing materials along the barrel and others shaped for mixing the materials conveyed. A 0.75 KW variable speed D.C. motor 4 is connected via torque limit coupling 5 to a gearbox 6 connected to one end of the screws. A cooled sealed housing 7 surrounds the connection which is sealed. An inlet 8 is present adjacent one end of the housing and an outlet 9 towards the other. The outlet 9 contains an adjustable spring loaded ball seal 10 to control the pressure applied to the material in the extruder.

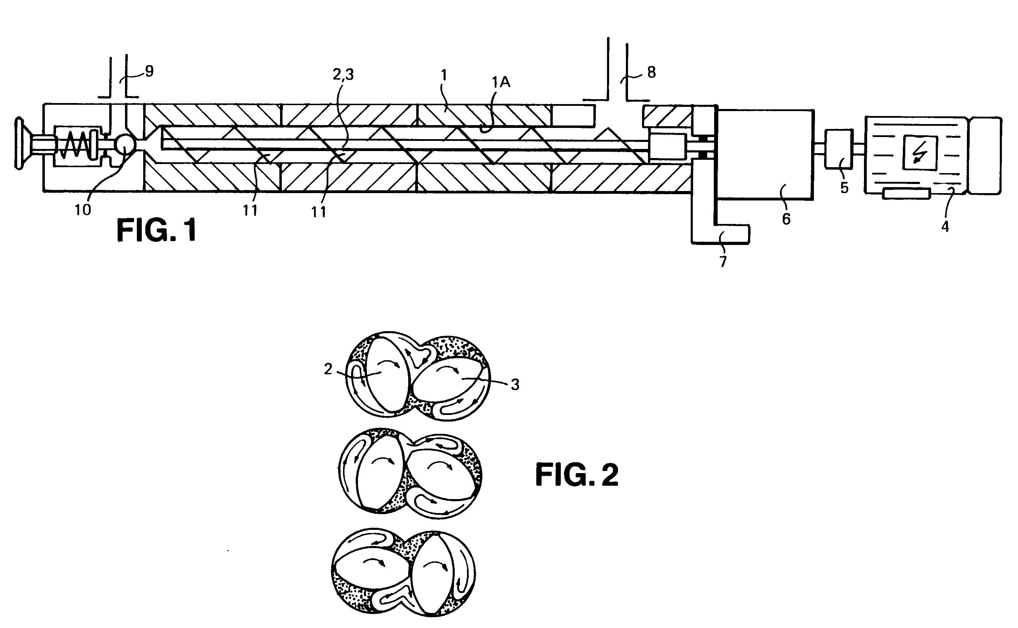

A catalyst, e.g. platinum, is deposited on the steel paddles 11 of the screws to a thickness of a few micron. A mix is extruded through the apparatus, the screws 2,3 intermeshing as shown in Figure 2, to mix the ingredients. Because of the screw activity a thin film of the ingredients is squeezed against the paddles so causing high surface area contact between the ingredients and the catalyst on the paddles.

In order that the invention may be well understood it will now be described by way of illustration with reference to the following examples. Example I to III relate to hydrogenation of soya bean oil and Examples IV & V to deprotection using ammonium formate as the hydrogen source.

### Example I

Selected catalysts as listed below were coated on different impellers in a high pressure stirred autoclave. Samples of soya bean oil were hydrogenated and the rate of hydrogen uptake measured. The pressure was 5 bar, the temperature 125°C and the stirring speed was 1000 rpm. The results are also shown below.

| **Catalyst** | **Hydrogen uptake (litre min)** |
|---|---|
| palladium applied to mild steel impeller surfaces | 5 x 10⁻⁴ |
| as above but with the catalyst first activated by hydrazine reduction | 6.6 x 10⁻³ |
| palladium on anodised aluminium impeller surfaces | 4.8 x 10⁻³ |

### Example II

Soya bean oil was reacted with hydrogen in an extruder under a pressure of 50 bar, a temperature of 125°C and at a speed of blade rotation of 1000 rpm. The impeller was coated as set out below.

| | **Catalyst** | **Hydrogen uptake (l/min)** |
|---|---|---|
| 1. | palladium coated on to mild steel blades by electroless process | 5.0 x 10⁻⁴ |
| 2. | as above but hydrazine reduced | 6.56 x 10⁻³ |

### Example III

Soya bean oil was hydrogenated using an extruder the impeller paddles of which were mild steel on to which palladium was coated by an electroless method. The oil was treated under different conditions and the percentage hydrogenation (expressed as a proportion of complete hydrogenation was noted). The conditions and results are shown in the Table.

| **Pressure (bar)** | **Treatment time (mins)** | **Conversion (%)** |
|---|---|---|
| 6 | 9 | 15.4 |
| 30 | 7.2 | 21.4 |
| 50 | 7.2 | 22.8 |

### Example IV

To a twin screw extruder equipped with palladium coated mild steel paddles was added 4-benzyloxyphenol (0.4, 2.0 mmol) ammonium formate (0.6 g, 9.5 mmol) and methanol (20 cm³ ). The paddles were stirred at 200 rpm and the solution was heated to 60°C. After 40 minutes the solution was allowed to cool and was collected. Analysis (nuclear magnetic resonance and thin layer chromatography) of the mixture showed it to be 20% hydroquinone (1,4-benzenediol) and 80% 4-benzyloxyphenol.

### Example V

To a twin extruder equipped with palladium coated mild steel paddles was added N-benzyl-N-ethylaniline (0.5 g, 2.4 mmol), ammonium formate (0.6 g, 9.5 mmol) and methanol (20cm³). The paddles were stired at 200 rpm and the solution was heated to 60°C. After 40 minutes the solution was allowed to cool and was collected. Analysis (nuclear magnetic resonance and thin layer chromatography) of the mixture showed it to be 20% N-ethylaniline and 80% N-benzyl-N-ethylaniline.

## Claims

1. Apparatus comprising an elongate reaction chamber containing a moving member (2,3), an inlet (8) towards one end of the chamber and an outlet (9) towards the other, the member (2,3) being shaped so that in co-operation with the wall (1A) of the chamber chemically interactive materials introduced in the inlet (8) are intermixed on their passage through the apparatus to the outlet (9), means (4,5,6) for causing relative movement between the member (2,3) and the chamber, a substance which influences the chemical reaction of the materials being present, wherein the substance is present on the surface of the member (2,3) and/or of the chamber wall (1A) and in that the member (2,3) is dimensioned relative to the chamber to form a thin film of the reactants as they pass through the chamber towards the outlet (9).

2. Apparatus according to Claim 1 **characterised in that** the substance is catalyst or an enzyme.

3. Apparatus according to Claim 2 **characterised in that** the catalytically active substance is provided over all or part of the surface of the member (2,3) and/or the wall (1A) of the chamber.

4. Apparatus according to Claim 3 **characterised in that** the substance is present on the paddle elements (11) of the member (2,3).

5. Apparatus according to any preceding Claim **characterised in that** the chemically active material has been applied to the surface of the member (2,3) and/or the wall (1A) of the chamber by one of the following methods:
- electroless plating
- spraying
- chemical vapour deposition
- alumina wash coating sputtering followed by impregnation
- direct impregnation

6. Apparatus according to any preceding Claim **characterised in that** the chemically active material is secured to the surface (1A,2,3) in such a way that a proportion thereof is released to emerge with the mix from the outlet (9).

7. Apparatus according to Claim 6 **characterised in that** a slurry of a catalyst is cast on a magnetic support held to a member (2,3) or barrel wall (1A) made of magnetic material and the catalyst is then separated from the mix after it has left the apparatus.

8. Apparatus according to any preceding Claim **characterised in that** the member (2,3) comprises a screw member which comprises a plurality of screw members (2,3) which in use intermesh and closely wipe over the surface of each other and that of the inner wall of the chamber.

9. A method of mixing chemically interactive components of a composition, the method comprising urging the components through a reaction chamber containing a moving member (2,3), the member (2,3) being arranged to mix the reactants, a substance which will influence the chemical interaction being present, wherein the substance is present on the surface of the member (2,3) and/or the wall (1A) of the chamber, the member (2,3) is dimensioned relative to the chamber to form a relatively thin film of reactants and the mixing takes place continuously.

10. A method according to Claim 9 **characterised in that** the substance is a catalyst or enzyme.

11. A method according to Claim 9 or 10, **characterised in that** the substance is present over all or part of the surface of the member (2,3) and/or the wall (1A) of the chamber.

12. A method according to Claim 9, 10 or 11, **characterised by** supplying unreacted polymeric or monomeric materials to the reaction chamber to undergo a graft reaction or interchain copolymer formation or coupling - crosslinking reaction or bulk polymerisation or controlled degradation or functionalisation.

13. A method according to any of Claims 9 to 12, **characterised by** carrying out catalysed reactions using hydrogen supplied at high pressures.

14. A method according to any of Claims 9 to 13 applied to the hydrogenation of fatty nitriles to fatty amines, the hydroformylation of long chain olefins to long chain alcohols, the hydrogenation of edible vegetable oils, platinum metal catalysed hydrogenation and hydroformylation reactions, the hydrogenation of molasses to xylitol, mannitol and sorbitol or to fat hardening.

15. A method according to any of Claims 9 to 12, applied to the dimerisation of oleic acid to the dimer and trimer acids or transesterification of dimethyl terephthalate and ethylene glycol to bisethylene terephthalate and methanol.

16. A method according to any of Claims 9 to 12, applied to the conversion of waste lignin to useful chemicals or to the conversion of carbohydrates into xylitol, mannitol and sorbitol.

17. A method according to Claim 16 including the step of controlling the speed of rotation of the paddles (11) to avoid the deposition of colloidal material onto the catalyst.

18. A method according to any of Claims 9 to 12, applied to the recovery of glucose from dustbin waste by the acid catalysed hydrolysis of cellulose.

19. A method according to any of Claims 9 to 12, applied to
i) conversion of cellulosic wastes to a hydrocarbon oil; or
ii) the alkaline hydrolysis of domestic waste to glucose; or
iii) recovery of PET or polyurethane from domestic waste as the respective monomers; or
iv) continuous rendering of animal/vegetable fatty wastes

20. A method according to any of Claims 10 to 13 applied to the removal of lignin from chopped wood, using calcium sulphide to solubilise the lignin or applied to the protection and deprotection of functional groups.

## Patentansprüche

1. Vorrichtung umfassend eine längliche Reaktionskammer, die ein bewegliches Element (2,3), einen Eingang (8) zu einem Ende und einen Ausgang (9) zum anderen Ende der Kammer enthält, wobei das Element (2,3) so geformt ist, daß in Zusammenwirkung mit der Wand (1A) der Kammer chemisch interaktives Material, das über den Eingang (8) eingeleitet wird, auf seinem Weg durch die Vorrichtung zum Ausgang (9) vermischt wird, sowie Mittel (4,5,6), die zwischen dem Element (2,3) und der Kammer eine relative Bewegung erzeugen, eine Substanz, die die chemische Reaktion des anwesenden Materials beeinflußt, wobei die Substanz auf der Oberfläche des Elementes (2,3) und/oder auf der Kammerwand (1A) vorliegt und das Element (2,3) relativ zur Kammer so dimensioniert ist, daß es einen dünnen Film aus den Reaktionspartnern bildet, wenn diese durch die Kammer zum Ausgang (9) geleitet werden.

2. Vorrichtung nach Anspruch 1, dadurch gekennzeichnet, daß die Substanz ein Katalysator oder ein Enzym ist.

3. Vorrichtung nach Anspruch 2, dadurch gekennzeichnet, daß die katalytisch aktive Substanz auf der gesamten oder einem Teil der Oberfläche des Elementes (2,3) und/oder der Wand (1A) der Kammer vorhanden ist.

4. Vorrichtung nach Anspruch 3, dadurch gekennzeichnet, daß sich die Substanz auf den Schaufelelementen (11) des Elementes (2,3) befindet.

5. Vorrichtung nach einem der vorhergehenden Ansprüche, dadurch gekennzeichnet, daß das chemisch aktive Material mit einem der folgenden Verfahren auf die Oberfläche des Elementes (2,3) und/oder auf die Wand (1A) der Kammer aufgetragen wird:
- stromloses Beschichten
- Besprühen
- chemische Aufdampfung
- Aufstäuben eines Aluminiumoxid-Waschüberzugs gefolgt von einer Imprägnierung
- direktes Imprägnieren

6. Vorrichtung nach einem der vorhergehenden Ansprüche, dadurch gekennzeichnet, daß das chemisch aktive Material so auf der Oberfläche (1A, 2,3) haftet, daß ein Teil davon freigegeben wird und mit dem Gemisch über den Ausgang (9) austritt.

7. Vorrichtung nach Anspruch 6, dadurch gekennzeichnet, daß ein Brei aus einem Katalysator auf einen magnetischen Träger gegossen wird, der an einem Element (2,3) oder an einer Trommelwand (1A) aus magnetischem Material gehalten wird, wobei der Katalysator von dem Gemisch getrennt wird, nachdem dieses die Vorrichtung verlassen hat.

8. Vorrichtung nach einem der vorausgehenden Ansprüche, dadurch gekennzeichnet, daß das Element (2,3) ein Schneckenelement umfaßt, das eine Mehrzahl von Schneckenelementen (2,3) umfaßt, die im Gebrauch ineinandergreifen und dicht über ihre Oberflächen und die der Innenwand der Kammer reiben.

9. Verfahren zum Mischen chemisch interaktiver Komponenten einer Zusammensetzung, wobei das Verfahren folgendes umfaßt: Treiben der Komponenten durch eine Reaktionskammer, die ein bewegliches Element (2,3) enthält, wobei das Element (2,3) so angeordnet ist, daß es die Reaktionspartner vermischt, eine Substanz, die die vorhandene chemische Interaktion beeinflußt, wobei sich die Substanz auf der Oberfläche des Elementes (2,3) und/oder der Wand (1A) der Kammer befindet, das Element (2,3) relativ zur Kammer so dimensioniert ist, daß ein relativ dünner Film aus Reaktionspartner gebildet wird und das Mischen kontinuierlich stattfindet.

10. Verfahren nach Anspruch 9, dadurch gekennzeichnet, daß die Substanz ein Katalysator oder ein Enzym ist.

11. Verfahren nach Anspruch 9 oder 10, dadurch gekennzeichnet, daß die Substanz auf der gesamten oder einem Teil der Oberfläche des Elementes (2,3) und/oder der Wand (1A) der Kammer vorhanden ist.

12. Verfahren nach Anspruch 9, 10 oder 11, dadurch gekennzeichnet, daß nicht umgesetztes polymeres oder monomeres Material der Reaktionskammer zugeführt wird, um einer Pfropfreaktion oder einer kettenübergreifenden Copolymerbildung oder einer Verknüpfungs-Vernetzungsreaktion oder einer Substanzpolymerisation oder einer gesteuerten Zerlegung oder einer Funktionalisierung unterzogen zu werden.

13. Verfahren nach einem der Ansprüche 9 bis 12, dadurch gekennzeichnet, daß katalysierte Reaktionen unter Verwendung von unter hohem Druck zugeführtem Wasserstoff durchgeführt werden.

14. Verfahren nach einem der Ansprüche 9 bis 13, das für folgendes angewendet wird: Hydrieren von fetthaltigen Nitrilen zu Fettsäureaminen, Hydroformylieren von langkettigen Olefinen zu langkettigen Alkoholen, Hydrieren von eßbaren Pflanzenölen, Hydrierungs- und Hydroformylierungsreaktionen mit metallischem Platin als Katalysator, Hydrieren von Melassen zu Xylitol, Mannitol und Sorbitol oder Fetthärten.

15. Verfahren nach einem der Ansprüche 9 bis 12, das zum Dimerisieren von Ölsäure in Dimer- und Trimersäuren oder zum Umestern von Dimethylterephthalat und Ethylenglykol in Bisethylenterephthalat und Methylalkohol angewendet wird.

16. Verfahren nach einem der Ansprüche 9 bis 12, das zum Umwandeln von Ausschußlignin in nützliche Chemikalien oder zum Umwandeln von Kohlenhydraten in Xylitol, Mannitol und Sorbitol angewendet wird.

17. Verfahren nach Anspruch 16, bei dem die Rotationsgeschwindigkeit der Schaufeln (11) geregelt wird, um eine Ablagerung von Kolloidmaterial auf den Katalysator zu verhindern.

18. Verfahren nach einem der Ansprüche 9 bis 12, das zum Wiedergewinnen von Glucose aus Abfallmaterial durch säurekatalysierte Hydrolyse von Zellulose angewendet wird.

19. Verfahren nach einem der Ansprüche 9 bis 12 zur:
(i) Umwandlung von Zelluloseabfällen in ein Kohlenwasserstofföl; oder
(ii) alkalischen Hydrolyse von Haushaltsabfällen zu Glucose; oder
(iii) Wiedergewinnung von Polyethylenterephthalat oder Polyurethan aus Haushaltsabtallen als entsprechende Monomere; oder
(iv) kontinuierlichen Ausschmelzung von fetthaltigen tierischen oder pflanzlichen Abfällen.

20. Verfahren nach einem der Ansprüche 10 bis 13, das zum Entfernen von Lignin aus zerkleinertem Holz unter Verwendung von Calciumsulfid zum Solubilisieren des Lignins angewendet wird oder zum Schützen und Freigeben von funktionellen Gruppen.

## Revendications

1. Appareil comprenant une chambre de réaction allongée contenant un élément mobile (2, 3), une entrée (8) à proximité d'une extrémité de la chambre et une sortie (9) à proximité de l'autre extrémité, l'élément (2, 3) étant conçu de telle sorte que, en coopération avec la paroi (1A) de la chambre, des matières manifestant une interaction par voie chimique introduites dans l'entrée (8) sont mélangées lors de leur passage à travers l'appareil en direction de la sortie (9), des moyens (4, 5, 6) pour permettre un mouvement relatif entre l'élément (2, 3) et la chambre, une substance qui influence la réaction chimique des matières étant présente, dans lequel la substance est présente sur la surface de l'élément (2, 3) et/ou de la paroi (1A) de la chambre, et en ce que l'élément (2, 3) est dimensionné par rapport à la chambre pour permettre aux réactifs de former un film mince lorsqu'ils traversent la chambre en direction de la sortie (9).

2. Appareil selon la revendication 1, caractérisé en ce que la substance est un catalyseur ou une enzyme.

3. Appareil selon la revendication 2, caractérisé en ce que la substance manifestant une activité par voie catalytique est prévue sur toute ou sur une partie de la surface de l'élément (2, 3) et/ou de la paroi (1A) de la chambre.

4. Appareil selon la revendication 3, caractérisé en ce que la substance est présente sur les éléments (11) en forme d'ailettes de l'élément (2, 3).

5. Appareil selon l'une quelconque des revendications précédentes, caractérisé en ce que la matière manifestant une activité par voie chimique a été appliquée sur la surface de l'élément (2, 3) et/ou de la paroi (1A) de la chambre à l'aide d'un des procédés ci-après:
- dépôt autocatalytique
- pulvérisation
- déposition en phase gazeuse par procédé chimique
- pulvérisation cathodique d'une couche primaire d'accrochage d'alumine, suivie d'une imprégnation
- imprégnation directe.

6. Appareil selon l'une quelconque des revendications précédentes, caractérisé en ce que la matière manifestant une activité par voie chimique est fixée à la surface (1A, 2, 3) de telle sorte qu'une proportion de ladite matière est libérée pour émerger avec le mélange de la sortie (9).

7. Appareil selon la revendication 6, caractérisé en ce qu'on coule une bouillie d'un catalyseur sur un support magnétique qui est fixé à un élément (2, 3) ou à une paroi tubulaire (1A) réalisé en une matière magnétique, le catalyseur étant ensuite séparé du mélange après avoir quitté l'appareil.

8. Appareil selon l'une quelconque des revendications précédentes, caractérisé en ce que l'élément (2, 3) comprend un élément de vis sans fin qui comprend plusieurs éléments de vis sans fin (2, 3) qui, lors de l'utilisation, s'engrènent l'un dans l'autre et passent par frottement à proximité étroite de leurs surfaces respectives et de celle de la paroi interne de la chambre.

9. Procédé pour mélanger des composants d'une composition manifestant une interaction par voie chimique, le procédé comprenant le fait de presser les composants à travers une chambre de réaction contenant un élément mobile (2, 3), l'élément (2, 3) étant arrangé pour mélanger les réactifs, une substance qui va influencer l'interaction par voie chimique étant présente, dans lequel la substance est présente sur la surface de l'élément (2, 3) et/ou de la paroi (1A) de la chambre, l'élément (2, 3) étant dimensionné, par rapport à la chambre, pour permettre aux réactifs de former un film relativement mince et pour permettre au mélange de se dérouler en continu.

10. Appareil selon la revendication 9, caractérisé en ce que la substance est un catalyseur ou une enzyme.

11. Appareil selon la revendication 9 ou 10, caractérisé en ce que la substance est présente sur toute ou sur une partie de la surface de l'élément (2, 3) et/ou de la paroi (1A) de la chambre.

12. Procédé selon la revendication 9, 10 ou 11, caractérisé par le fait d'alimenter la chambre de réaction en matières polymères ou monomères n'ayant pas réagi pour les soumettre à une réaction de greffage ou à une formation de copolymères par interaction des chaînes ou encore à une réaction de couplage-réticulation, ou bien à une polymérisation en masse ou encore à une dégradation ou à une fonctionnalisation contrôlée.

13. Procédé selon l'une quelconque des revendications 9 à 12, caractérisé par le fait qu'on effectue les réactions catalysées en utilisant de l'hydrogène alimenté sous haute pression.

14. Procédé selon l'une quelconque des revendications 9 à 13, appliqué à l'hydrogénation de nitriles gras pour obtenir des amines grasses, à l'hydroformylation d'oléfines à longues chaînes pour obtenir des alcools à longues chaînes, à l'hydrogénation d'huiles végétales comestibles, à des réactions d'hydrogénation et d'hydroformylation catalysées par un métal du groupe du platine, à l'hydrogénation de mélasses pour obtenir du xylitol, du mannitol et du sorbitol, ou encore au durcissement de graisses.

15. Procédé selon l'une quelconque des revendications 9 à 12, appliqué à la dimérisation de l'acide oléique pour obtenir des acides dimères et trimères ou à la transestérification de diméthyltéréphtalate ou d'éthylèneglycol pour obtenir du biséthylènetéréphtalate et du méthanol.

16. Procédé selon l'une quelconque des revendications 9 à 12, appliqué à la conversion de lignine résiduaire pour obtenir des produits chimiques utiles ou encore à la conversion d'hydrates de carbone pour obtenir du xylitol, du mannitol et du sorbitol.

17. Procédé selon la revendication 16, englobant l'étape consistant à régler la vitesse de rotation des ailettes (11) pour éviter la déposition de la matière colloïdale sur le catalyseur.

18. Procédé selon l'une quelconque des revendications 9 à 12, appliqué à la récupération de glucose à partir de déchets ménagers par hydrolyse de la cellulose catalysée par un acide.

19. Procédé selon l'une quelconque des revendications 9 à 12, appliqué à
i) la conversion de déchets cellulosiqties en une huile d'hydrocarbure; ou
ii) à l'hydrolyse alcaline de déchets ménagers pour obtenir du glucose; ou
iii) à la récupération de PET ou de polyuréthanne à partir de déchets ménagers, sous forme des monomères respectifs; ou
iv) à la fusion en continu de déchets de graisses animales/végétales.

20. Procédé selon l'une quelconque des revendications 10 à 13, appliqué à l'élimination de lignine à partir de bois découpé en utilisant du sulfure de calcium pour solubiliser la lignine ou encore appliqué à la protection et à la déprotection de groupes fonctionnels.
